# EUROPEAN PATENT APPLICATION

(11) **EP 4 675 997 A1**
(43) Date of publication of application: **07.01.2026**
(21) Application number: 24781030.2
(22) Date of filing: 23.02.2024
(51) Int. Cl.: H04L 47/24

(54) **METHOD AND DEVICE FOR PERFORMING MULTI-ACCESS PACKET DISTRIBUTION BASED ON NETWORK TELEMETRY**

(30) Priority: 31.03.2023 KR 20230042737
(71) Applicant: Samsung Electronics Co., Ltd., Suwon-si, Gyeonggi-do 16677 (KR)
(72) Inventor: MOON, Younggyoun, Suwon-si, Gyeonggi-do 16677 (KR); KIM, Dongmyung, Suwon-si, Gyeonggi-do 16677 (KR); KIM, Sunhyun, Suwon-si, Gyeonggi-do 16677 (KR); KIM, Sunghwan, Suwon-si, Gyeonggi-do 16677 (KR); HAN, Yoonseon, Suwon-si, Gyeonggi-do 16677 (KR)
(74) Representative: HGF
(86) International application number: PCT/KR2024/002376
(87) International publication number: WO 2024/205036

(57) **Abstract**

A method of a terminal according to an embodiment of the present disclosure may comprise the steps of: receiving, via a first access network from a first network entity performing a user plane function (UPF), a first packet including respective pieces of in-band network telemetry (INT) information of one or more nodes included in a transmission path between the terminal and the first network entity; determining a traffic distribution method on the basis of the first packet including the one or more pieces of INT information; and transmitting a second packet to the UPF via the first access network or a second access network on the basis of the determined traffic distribution method.

## Description

### [Technical Field]

The disclosure relates to a terminal and a network entity in a wireless communication system. More specifically, the present disclosure relates to a method and device for performing multi-access packet distribution based on network telemetry.

### [Background Art]

Looking back at the evolution of wireless communication generations, technologies have primarily been developed for human-centric services such as voice, multimedia, and data. Since the commercialization of 5th-generation (5G) communication systems, it is expected that connected devices, which are experiencing explosive growth, will be connected to communication networks. Examples of things connected to the networks may include vehicles, robots, drones, home appliances, displays, smart sensors installed in various infrastructures, construction equipment, factory equipment, etc. Mobile devices are expected to evolve into various form factors such as augmented reality glasses, virtual reality headsets, and holographic devices. In the 6th-generation (6G) era, efforts are being made to develop an improved 6G communication system in order to provide various services by connecting hundreds of billions of devices and things. For this reason, the 6G communication system is called a beyond 5G system.

A maximum transmission speed of the 6G communication system, which is expected to be realized around 2030, is tera (i.e., 1,000 giga) bps, and wireless latency is 100 microseconds (µsec). That is, the transmission speed of the 6G communication system is 50 times faster than that of the 5G communication system, and the wireless latency is reduced to one-tenth.

To achieve the high data transmission speed and ultra-low latency, the 6G communication system is being considered for implementation in a terahertz band (e.g., 95 gigahertz (95 GHz) to 3 terahertz (3 THz) band). In the terahertz band, due to more severe path loss and atmospheric absorption compared to the millimeter-wave (mmWave) band introduced in 5G, the importance of technologies that may ensure a signal reach distance, i.e., coverage, is expected to increase significantly. As key technologies to ensure coverage, multi-antenna transmission technologies, such as radio frequency (RF) components, antennas, novel waveforms surpassing orthogonal frequency division multiplexing (OFDM) in coverage performance, beamforming, massive multiple-input and multiple-output (MIMO), full dimensional MIMO (FD-MIMO), array antennas, and large scale antennas, should be developed. In addition, new technologies such as metamaterial-based lenses and antennas, high-dimensional spatial multiplexing technology using orbital angular momentum (OAM), and reconfigurable intelligent surface (RIS) are being discussed to improve the coverage of a terahertz band signal.

In addition, in order to enhance frequency efficiency and improve a system network, in the 6G communication system, full duplex technology, where uplink and downlink simultaneously utilize the same frequency resources at the same time, network technology that integrally utilizes satellites and high-altitude platform stations (HAPS), network structure innovation technology that supports mobile base stations, etc., and enables network operation optimization and automation, etc., dynamic spectrum sharing technology through collision avoidance based on spectrum usage prediction, AI-based communication technology that utilizes artificial intelligence (AI) from the design stage and embeds end-to-end AI support functions to realize system optimization, next-generation distributed computing technology that realizes services with complexity that exceeds the limits of terminal computing capabilities by utilizing ultra-high-performance communication and computing resources (mobile edge computing (MEC), cloud, etc.), etc., are being developed. In addition, attempts are being made to further strengthen connectivity between devices, further optimize networks, promote softwareization of network entities, and increase openness of wireless communications through the design of new protocols to be used in 6G communication systems, the implementation of hardware-based security environments, the development of mechanisms for safe use of data, and the development of privacy-preserving technologies.

The research and development of the 6G communication system is expected to enable the next hyper-connected experience through the hyper-connectivity of the 6G communication system that includes not only connections between things but also connections between people and things. Specifically, it is expected that services such as truly immersive extended reality (XR), high-fidelity mobile hologram, and digital replica will be provided through the 6G communication system. In addition, services such as remote surgery, industrial automation, and emergency response through enhanced security and reliability are provided through the 6G communication system, and thus, will be applied in various fields such as industry, medicine, automobiles, and home appliances.

In order to satisfy the above-described various services, technologies for traffic transmission through various types of access networks in mobile communication systems are being developed.

Specifically, in the 3GPP Rel-11 and 12, coordinated multi-point (CoMP) technology has been proposed as a technology to support dual connectivity in Layer-2. In the 3GPP Rel-13 and 14, LTE-WLAN aggregation (LWA) and LTE-WLAN radio-level integration with IP security tunnel (LWIP) technologies were standardized for the purpose of integrated forwarding of LTE access and WLAN access, and have been utilized in commercial environments. Since then, with the advent of 5G, there was a requirement for comprehensive technology that encompasses non-3GPP access networks as well. Accordingly, in the 3GPP Rel-16, access traffic steering, switching, splitting (ATSSS) technology was proposed. More specifically, the 5G system architecture supports not only access networks that pass through multiple radio access technologies (RATs) but also the non-3GPP access (such as Wi-Fi), and multi-access (MA) PDU sessions using the multi-access may be controlled/operated through a single common core network.

By using the above-described technologies, transmission stability may be improved through multiple transmission paths through multiple access networks, and resistance to problems caused by network congestion, wireless section loss, etc., may be increased. In addition, packet distribution across multi-access networks may be utilized in various ways, such as alleviating a network congestion problem and increasing a maximum bandwidth.

Based on the discussion described above, the present disclosure proposes a method and device for resolving a quality degradation problem in a network performance monitoring scheme based on end to end (E2E) transmission measurement values, after quality degradation occurs due to congestion.

### [Disclosure of Invention]

### [Technical Problem]

The present disclosure provides a method and device for performing multi-access packet distribution based on network telemetry.

More specifically, the present disclosure provides a method and device for resolving a quality degradation problem in a network performance monitoring scheme based on end to end (E2E) transmission measurement values, when quality degradation occurs due to congestion.

The technical problems to be achieved by embodiments of the present disclosure are not limited to the above-described technical problems. That is, other technical problems that are not described may be obviously understood by those skilled in the art to which the present disclosure pertains from the following description.

### [Solution to Problem]

According to an embodiment, a method performed by a terminal in a wireless communication system includes: receiving, via a first access network from a first network entity performing a user plane function (UPF), a first packet including respective pieces of in-band network telemetry (INT) information of one or more nodes included in a transmission path between the terminal and the first network entity; determining a traffic distribution scheme based on the first packet including the one or more pieces of INT information; and transmitting a second packet to the UPF via the first access network or a second access network based on the determined traffic distribution scheme.

According to another embodiment, a method performed by a first network entity performing a user plane function (UPF) in a wireless communication system includes: determining whether each of one or more nodes included in a transmission path between a terminal and the first network entity on a first access network instructs recording of in-band network telemetry (INT) information; generating a first packet including an indicator instructing the recording of the INT information when it is determined to instruct the recording of the INT information ; and transmitting the generated first packet to the terminal via the first access network.

According to still another embodiment, a terminal in a wireless communication system includes: a transceiver transmitting and receiving a signal; and a control unit connected to the transceiver, in which the control unit controls to receive, via a first access network from a first network entity performing a user plane function (UPF), a first packet including respective pieces of in-band network telemetry (INT) information of one or more nodes included in a transmission path between the terminal and the first network entity, determine a traffic distribution scheme based on the first packet including the one or more pieces of INT information, and transmit a second packet to the UPF via the first access network or a second access network based on the determined traffic distribution scheme.

According to still yet another embodiment, a first network entity performing a user plane function (UPF) in a wireless communication system includes: a transceiver transmitting and receiving a signal; and a control unit connected to the transceiver, in which the control unit controls to determine whether each of one or more nodes included in a transmission path between a terminal and the first network entity on a first access network instructs recording of in-band network telemetry (INT) information, generate a first packet including an indicator instructing the recording of the INT information when it is determined to instruct the recording of the INT information, and transmit the generated first packet to the terminal via the first access network.

### [Advantageous Effects of Invention]

According to various embodiments proposed in the present disclosure, the terminal and the network entity may prevent the congestion from occurring on the access network. More specifically, according to the method and device of an embodiment of the present disclosure, it is possible to measure network information on a packet-by-packet basis in a communication system. Thereafter, by performing packet distribution between multi-accesses before a quality degradation problem occurs when a degradation of transmission quality is expected, it is possible to prevent the degradation of the transmission quality.

In particular, by preventing the degradation of quality of applications having ultra-reliable and low latency communications (URLLC) characteristics that should ensure high stability and very low latency, it is possible to increase communication efficiency.

Effects which can be achieved by the present disclosure are not limited to the above-described effects. That is, other effects that are not described may be obviously understood by those skilled in the art to which the present disclosure pertains from the following description.

### [Brief Description of Drawings]

In order to more clearly describe the technical solutions of the embodiments proposed in the present disclosure, drawings of the embodiments will be briefly introduced. The following drawings are merely referenced in the embodiments of the present disclosure and are not intended to limit the scope of the present disclosure.
FIG. 1 is a diagram illustrating a communication system according to an embodiment of the present disclosure.
FIG. 2 is a diagram for describing an access traffic steering, switching, splitting (ATSS) technology according to an embodiment of the present disclosure.
FIG. 3 is a diagram illustrating a communication system based on in-band network telemetry (INT) according to embodiments of the present disclosure.
FIG. 4 is a diagram illustrating an end-to-end-based performance monitoring scheme and a network telemetry based monitoring scheme according to an embodiment of the present disclosure.
FIG. 5 is a diagram for describing multi-access distribution based on real-time network telemetry according to an embodiment of the present disclosure.
FIG. 6 is a flowchart illustrating the order in which a user equipment (UE) distributes traffic according to an embodiment of the present disclosure.
FIG. 7 is a flowchart illustrating the order in which a user plane function (UPF) transmits an in-band network telemetry (INT) packet according to an embodiment of the present disclosure.
FIG. 8A is a flowchart illustrating the order in which the user equipment (UE) transmits an in-band network telemetry (INT) probe packet according to an embodiment of the present disclosure.
FIG. 8B is a flowchart illustrating the order in which the user plane function (UPF) transmits the in-band network telemetry (INT) probe packet according to an embodiment of the present disclosure.
FIG. 9A is a flowchart illustrating the order in which the user equipment (UE) instructs recording of in-band network telemetry (INT) information according to an embodiment of the present disclosure.
FIG. 9B is a flowchart illustrating the order in which the user plane function (UPF) instructs the recording of the in-band network telemetry (INT) information according to an embodiment of the present disclosure.
FIG. 9C is a flowchart for describing the order in which an in-band network telemetry (INT) capable node adds the INT information according to an embodiment of the present disclosure.
FIG. 10 is a diagram illustrating a process of instructing the user plane function (UPF) and the user equipment (UE) to record the in-band network telemetry (INT) information according to another embodiment of the present disclosure.
FIG. 11A is a diagram for describing a method for collecting, by a user plane function (UPF) and a UE, in-band network telemetry (INT) information according to an embodiment of the present disclosure.
FIG. 11B is a diagram for describing a method for collecting, by a UE and a user plane function (UPF), in-band network telemetry (INT) information according to an embodiment of the present disclosure.
FIG. 12 is a diagram illustrating a configuration of a network device according to embodiments of the present disclosure.
FIG. 13 is a diagram illustrating a configuration of a base station according to embodiments of the present disclosure.
FIG. 14 is a diagram illustrating a configuration of a terminal according to embodiments of the present disclosure.

### [Mode for the Invention]

Hereinafter, embodiments of the present disclosure will be described in detail with reference to the accompanying drawings.

In describing the embodiments, descriptions of technical contents that are well known in the technical field to which the present disclosure pertains and are not directly related to the present disclosure will be omitted.

This is to more clearly convey the gist of the present disclosure without ambiguity by omitting unnecessary explanations.

For the same reason, some components in the accompanying drawings are exaggerated, omitted, or schematically illustrated. In addition, the size of each component does not entirely reflect the actual size. The same reference numerals are assigned to the same or corresponding components in each drawing.

Various advantages and features of the present disclosure and methods accomplishing the same will become apparent from the following detailed description of embodiments with reference to the accompanying drawings.

However, the present disclosure is not limited to exemplary embodiments to be described below, but may be implemented in various different forms, these embodiments will be provided only in order to make the configurations of the present disclosure complete and allow those skilled in the art to completely recognize the scope of the present disclosure, and the present disclosure will be defined by the scope of the claims. Throughout the specification, like reference numerals denote like components.

In this case, it will be appreciated that each block of a processing flowchart and combinations of the flowcharts may be executed by computer program instructions. Since these computer program instructions may be mounted in a processor of a general computer, a special computer, or other programmable data processing devices, these computer program instructions executed through the processor of the computer or the other programmable data processing devices create means performing functions described in a block(s) of the flowchart. Since these computer program instructions may also be stored in a computer usable or computer readable memory that may be directed to a computer or other programmable data processing devices in order to implement the functions in a specific scheme, the computer program instructions stored in the computer usable or computer readable memory can also produce manufacturing articles including instruction means performing the functions described in the block(s) of the flowchart. Since the computer program instructions may also be mounted on the computer or the other programmable data processing devices, the instructions performing a series of operation steps on the computer or the other programmable data processing apparatuses to create processes executed by the computer, thereby executing the computer or the other programmable data processing apparatuses may also provide steps for performing the functions described in a block(s) of the flowchart.

In addition, each block may indicate some of modules, segments, or codes including one or more executable instructions for executing a specific logical function(s). Further, it is to be noted that functions mentioned in the blocks occur regardless of a sequence in some alternative embodiments. For example, two blocks that are continuously illustrated may be simultaneously performed in fact or be performed in a reverse sequence depending on corresponding functions.

In this case, the term "~unit" used in the present disclosure refers to software or hardware components such as FPGA or ASIC, and "~unit" performs certain roles. However, the "~unit" is not meant to be limited to software or hardware. The "~unit" may be configured to be stored in a storage medium that can be addressed or may be configured to regenerate one or more processors. Accordingly, as an example, the "~unit" refers to components such as software components, object-oriented software components, class components, and task components, processes, functions, attributes, procedures, subroutines, segments of program code, drivers, firmware, microcode, circuits, data, databases, data structures, tables, arrays and variables. Components and functions provided within "~unit" may be combined into a smaller number of components and "~unit" or may be further separated into additional components and "~unit." In addition, components and "~ units" may be implemented to play one or more CPUs in a device or a secure multimedia card.

Hereinafter, for convenience of description, some terms and names defined in the 3rd generation partnership project (3GPP) standard (standard for 5G, NR, long term evolution (LTE), or similar systems) may be used. In addition, terms and names newly defined in the next generation communication system (e.g., 6G, beyond 5G system) to which the present disclosure may be applied or used in existing communication systems may be used. The use of these terms is not limited by the terms and names of the present disclosure, and may be equally applied to systems that comply with other standards, and may be changed into other forms without departing from the technical spirit of the present disclosure.

In addition, it will be understood that singular expressions such as "a" and "the" that do not clearly indicate different contents in an embodiment of the present disclosure include plural expressions.

Terms including an ordinal number, such as first and second, in an embodiment of the present disclosure may be used to describe various components. However, these components are not limited to these terms. The terms are only used to differentiate one component from other components. For example, a first component may be named a second component and the second component may also be similarly named the first component, without departing from the scope of the present disclosure.

In addition, in an embodiment of the present disclosure, the terms and/or include a combination of a plurality of related described items or any item among a plurality of related described items.

In addition, the terms used in an embodiment of the present disclosure are used only to describe a particular embodiment and are not intended to limit the present disclosure. Singular expressions are intended to include plural expressions unless the context clearly indicates otherwise. It will be understood that terms 'include' or 'have' used in the present specification, specify the presence of features, numerals, steps, operations, components, parts mentioned in the present specification, or a combination thereof, but do not preclude the presence or addition of one or more other features, numerals, steps, operations, components, parts, or a combination thereof.

In addition, in the present disclosure, the expressions "exceeding" and "less than" are used to determine whether a specific condition is satisfied or fulfilled, but this is only a description to express an example and does not exclude descriptions of "more than or equal to" or "less than or equal to". A condition described as "more than or equal to" may be replaced with "exceeding," a condition described as "less than or equal to" may be replaced with "less than," and a condition described as "more than or equal to and less than" may be replaced with "exceeding and less than or equal to."

Before describing the present disclosure in detail, examples of interpretable meanings for several terms used in the present specification are presented. However, it should be noted that the interpretation examples presented below are not limited.

In the present disclosure, a terminal (or, a communication terminal) is an entity that communicates with a base station or another terminal, and may be referred to as a node, user equipment (UE), next generation UE (NG UE), a mobile station (MS), a device, a terminal, etc. In addition, the terminal may include at least one of a smartphone, a tablet PC, a mobile phone, a video phone, an e-book reader, a desktop PC, a laptop PC, a netbook computer, a PDA, a portable multimedia player (PMP), an MP3 player, a medical device, a camera, or a wearable device. In addition, the terminal may include at least one of a television, a digital video disk (DVD) player, an audio, a refrigerator, an air conditioner, a cleaner, an oven, a microwave oven, a washing machine, an air cleaner, a set-top box, a home automation control panel, a security control panel, a media box, a game console, an electronic dictionary, an electronic key, a camcorder, or a digital photo frame. In addition, the terminal may include at least one of various medical devices (e.g., various portable medical measuring devices (such as a blood glucose meter, a heart rate meter, a blood pressure meter, a body temperature meter, or the like), a magnetic resonance angiography (MRA), a magnetic resonance imaging (MRI), a computed tomography (CT), a photographing device, an ultrasonic device, or the like), a navigation device, a global navigation satellite system (GNSS), an event data recorder (EDR), a flight data recorder (FDR), an automobile infotainment device, a marine electronic equipment (e.g., a marine navigation device, a gyro compass, or the like), avionics, a security device, an automobile head unit, an industrial or household robot, a drone, an automatic teller's machine of a financial institute, a point of sales (POS) of a shop, or Internet of things (IoT) devices (e.g., a light bulb, various sensors, a sprinkler system, a fire alarm, a thermostat, a street light, a toaster, an exercise equipment, a hot water tank, a heater, a boiler, and the like). In addition, the terminal may include various types of multimedia systems capable of performing communication functions. Meanwhile, the present disclosure is not limited to the foregoing, and the terminal may also be referred to by terms having the same or similar meaning thereto.

In addition, in the present disclosure, the base station is an entity that communicates with the terminal and performs resource allocation of the terminal, and may have various forms, and may be referred to as a base station (BS), a NodeB (NB), a next generation radio access network (NG RAN), an access point (AP), a transmission and reception point (TRP), a satellite base station, a wireless access unit, a base station controller, a node on a network, etc. Alternatively, according to function separation, the base station may be referred to as a central unit (CU) or a distributed unit (DU). Meanwhile, the present disclosure is not limited to the foregoing, and the base station may also be referred to by terms having the same or similar meaning thereto.

In addition, in the present disclosure, control information may be referred to as a control message, control signaling, or medium access control-control element (MAC-CE), downlink control information (DCI), uplink control information (UCI), or radio resource control (RRC) message depending on the context, and the present disclosure is not limited thereto, and may also be referred to by terms having the same or similar meanings thereto.

In addition, in the present disclosure, a transmitting end may be referred to as a transmitter, a first device, etc., and may mean a terminal in the case of uplink, and a base station in the case of downlink.

In addition, in the present disclosure, a receiving end may be referred to as a receiver, a second device, etc., and may mean a base station in the case of uplink, and a terminal in the case of downlink.

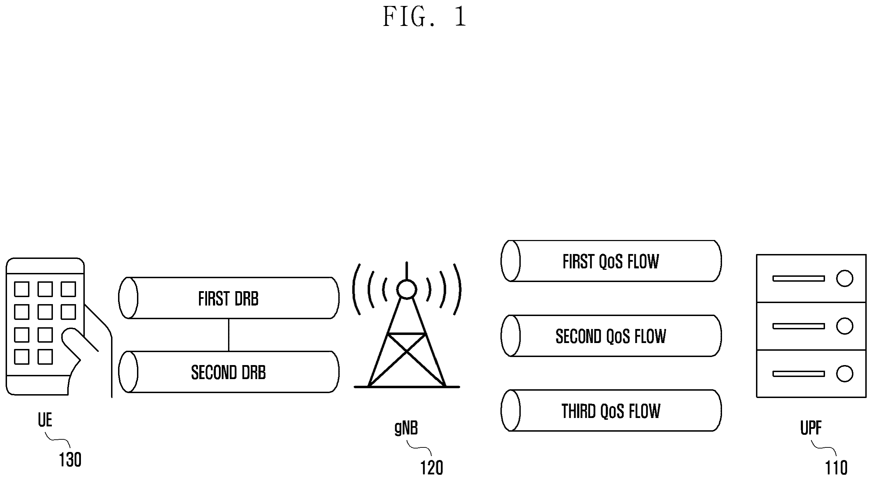

FIG. 1 is a diagram illustrating a communication system according to an embodiment of the present disclosure.

Referring to FIG. 1, FIG. 1 is a diagram illustrating user equipment (UE) 130, a base station (gNB) 120, and a user plane function (UPF) 110 as part of nodes of a communication system.

The UE 130 may access a data network (DN) through the gNB 120 and the UPF 110. In order for the UE 130 to transmit and receive data through the UPF 110, a protocol data unit (PDU) session should be generated, and one PDU session may include one or more quality of service (QoS) flows. More specifically, referring to FIG. 1, the PDU session may include a first QoS flow, a second QoS flow, and a third QoS flow.

The UE (terminal) 110 may be referred to as user equipment (UE), a mobile station, a subscriber station, a remote terminal, a wireless terminal, a user device, customer premise equipment (CPE), an electronic device, or other terms having equivalent technical meanings thereto.

The gNB 120 is a radio access network (RAN) node, and is a network infrastructure that provides wireless access to the UE. The gNB 120 may perform mapping between a QoS flow and a specific data radio bearer (DRB) based on information (QoS flow identifier (QFI) and QoS profile) received from one (e.g., session management function (SMF)) of control plane network functions of a core network (CN).

For example, referring to FIG. 1, the first QoS flow and the second QoS flow may be mapped to a first DRB, and the third QoS flow may be mapped to a second DRB.

The gNB (base station) 120 may be referred to as an access point (AP), an eNodeB (eNB), a 5th generation (5G) node, a next generation nodeB (gNB), a wireless point, a transmission and reception point (TRP), or other terms having equivalent technical meanings thereto.

The UPF 110 is a network function responsible for a user plane in the core network. The UPF 110 may perform a function of transmitting an uplink packet received from the gNB through a specific PDU session to a data network corresponding to the corresponding PDU session. In addition, the UPF 130 may perform a function of mapping a downlink packet received from a data network to a specific QoS flow included in a specific PDU session.

Here, the QoS flow may be associated with a set of QoS characteristics. In this case, the set of QoS characteristics may be defined according to a 5G QoS identifier (5QI).

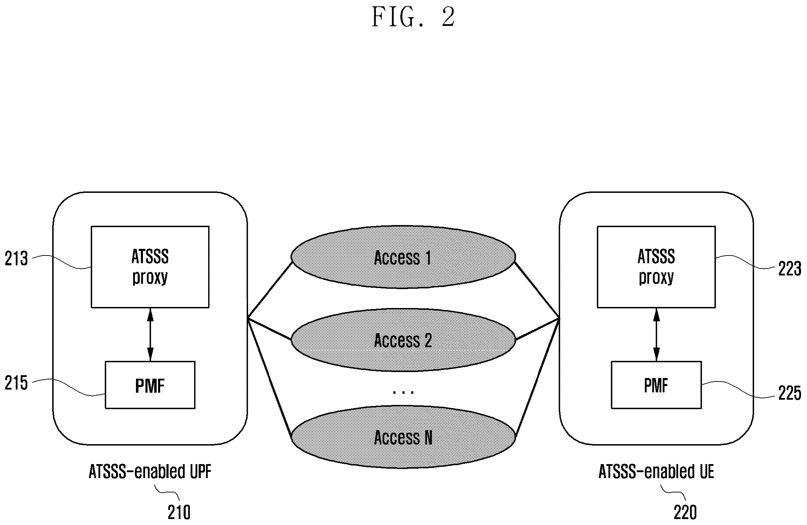

FIG. 2 is a diagram for describing an access traffic steering, switching, splitting (ATSS) technology according to an embodiment of the present disclosure.

In an embodiment of the present disclosure, when network traffic (hereinafter, the terms "packet" or "data" may be used interchangeably) exceeds capacity that may be processed in a corresponding wired/wireless section and thus congestion occurs, a method for resolving a congestion problem by distributing traffic through a multi-path for a multi-access network is proposed.

The ATSSS function may be utilized as a method for distributing the network traffic to the multi-path. The ATSSS technology and implementation method will be described in detail below.

The ATSSS function refers to a function for forwarding data traffic through one or more accesses by utilizing both 3GPP access and non-3GPP access between a UE and a 5G core network. The access traffic steering, switching, splitting (ATSSS) function includes all methods for steering, switching, and splitting data traffic.

More specifically, the UE may access a mobile communication network (e.g., 3GPP access) and a network (e.g., non-3GPP Access) other than a mobile communication network. The UE may communicate with an access and management function (AMF) through the 3GPP access and the non-3GPP access, and transmit and receive data through the UPF.

In this case, when the 5G core network determines that user-plane resources between the UE and the data network are insufficient or that a load has occurred on resource management capacity of the network, the data traffic between the UE and the data network may be selectively transmitted only through a specific access among the 5G access or the Wi-Fi access, or both the 5G access and the Wi-Fi access may be activated to distribute and transmit the data traffic via the two accesses.

An ATSSS-enabled UPF 210 and an ATSSS-enabled UE 220 according to the present disclosure may include an ATSSS proxy and a performance measurement function (PMF).

The ATSSS proxy may provide connectivity so that traffic received from a data network or a UE application may be forwarded to the multi-path through multiple accesses.

The implementation form and the multi-path protocol of the ATSSS proxy presented in the present disclosure may be implemented in various forms and are not limited to a specific implementation form or protocol. The ATSSS proxy may be implemented in the form of a multi-path TCP (MPTCP) proxy to support multi-path transmission of TCP connections, and may also be implemented in the form of a UDP-based multi-path QUIC (MPQUIC) proxy to support even non-TCP connections.

The ATSSS proxy (UPF-ATSSS proxy 213) operating in the ATSSS-enabled UPF 210 may determine via which access network downlink traffic is forwarded for an MA PDU session. The ATSSS proxy (UE-ATSSS proxy 223) operating in the ATSSS-enabled UE 220 may determine via which access network uplink traffic is forwarded.

The PMF is a function of measuring the network environment between the UE and the UPF, and may measure a round trip time (RTT) required for the uplink and the downlink, whether the 3GPP access and the non-3GPP access are currently activated, etc. Thereafter, the core network may determine a steering mode (steering, switching, splitting) that the core network may support based on the information provided by the PMF. Hereinafter, the PMF included in the UPF may be referred to as a UPF-PMF 215 and the PMF included in the UE may be referred to as a UE-PMF 225.

The ATSSS-enabled UPF 210 and the ATSSS-enabled UE 220 may determine a scheme for distributing a packet among multiple access networks by using the following packet distribution schemes when transmitting traffic on the downlink or the uplink using the ATTSS function.
1. Active-standby: switching to standby access when active one is unavailable
2. Priority-based: a single access with highest priority but without congestion
3. Smallest delay: a single access with shortest Round-Trip Time (RTT)
4. Load balancing: multiple accesses using weight-based rate control

The ATSSS-enabled UPF 210 and the ATSSS-enabled UE 220 may dynamically determine the packet distribution scheme in consideration of an access and link situation by using the packet distribution schemes.

For example, the ATSSS-enabled UPF 210 and the ATSSS-enabled UE 220 may collect information such as access and link availability, latency (round trip time (RTT)), and a packet loss ratio (PLR) through the PMFs 215 and 225 together with the ATSSS proxies 213 and 223, and then dynamically determine the packet distribution scheme according to the access and link situation.

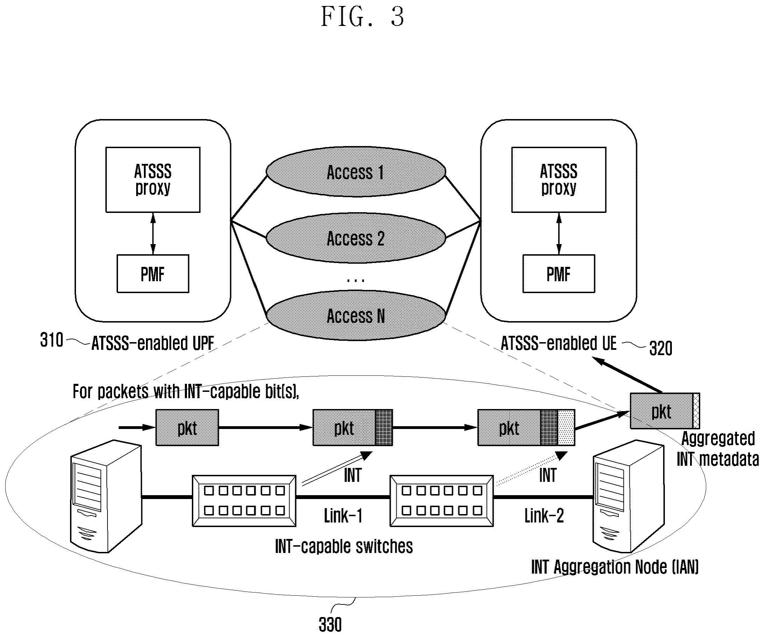

FIG. 3 is a diagram illustrating a communication system based on in-band network telemetry (INT) according to embodiments of the present disclosure.

According to an embodiment of the present disclosure, a network entity may perform the ATSSS function based on real-time network telemetry information. The network entity may include the user plane function (UPF) and the user equipment (UE).

The network telemetry is a technology for collecting network status information, and the collected information may include status information of connected equipment within a network and communication system, status information for each transmission link, etc.

The network telemetry may be divided into an in-band scheme and an out-of-band scheme according to a scheme for acquiring network status information. The out-of-band scheme is a scheme for acquiring network status information using a separate detection packet, while the in-band scheme is a scheme for acquiring network status information by inserting a telemetry packet into a data packet. Hereinafter, the in-band scheme may be referred to as in-band network telemetry (INT).

The INT scheme is a scheme for adding real-time network telemetry information at the time when a packet passes on a node-by-node basis or a hop-by-hop basis, and may measure the corresponding information on a packet-by-packet basis. According to the INT scheme, network entities (e.g., UPF and UE) may acquire the network status information on a data plane without intervention of a control plane.

The hop refers to a node located on a path (uplink or downlink) through which the packet passes. The hop may be used interchangeably with the terms node, network equipment, or network entity. The hop may include network switches/routers in core network, transport devices in between core network and RAN, cell-side routers (CSR) in RAN, and central unit (CU) and distributed unit (DU) instances in RAN.

The network telemetry information may be referred to one or more pieces of INT information or metadata. The network telemetry information is data that is inserted into a data packet and forwarded, and may include buffer queue length, a buffer occupancy, accumulate total bytes, timestamp, buffer-related information (e.g., queue usage, queue congestion status), etc. In addition, the network telemetry information may include congestion experienced (CE) information added to an explicit congestion notification (ECN) field added to a packet according to the congestion status in the case of a network queue in which active queue management (AQM) is performed.

In order to perform the ATSSS function, the UPF and the UE may support the ATSSS proxy and the performance measurement function (PMF).

The ATSSS proxy may determine via which access network the traffic is forwarded, and may be supported by the UPF and the UE, respectively. More specifically, the ATSSS proxy UPF (hereinafter referred to as "UPF-ATSSS proxy") operating in the UPF may determine via which access network the downlink traffic is forwarded for the MA PDU session. The ATSSS proxy (hereinafter referred to as "UE-ATSSS proxy") operating in the UE may determine via which access network the uplink traffic is forwarded.

The PMF may measure and monitor the network status in real time, and may be supported by the UPF and the UE, respectively. More specifically, the PMF (hereinafter, "UPF-PMF") operating in the UPF and the PMF (hereinafter, "UE-PMF") operating in the UE may identify each network status information based on one or more pieces of INT information.

Referring to FIG. 3, an ATSSS-enabled UPF 310 may transmit a downlink packet to an ATSSS-enabled UE 320. More specifically, the ATSSS-enabled UPF 310 may transmit a packet via a first access network, and the packet may instruct recording of the INT information (e.g., configure an INT-capable bit). INT-capable nodes 330 that receive the packet instructing the recording of the INT information may add their INT information to the packet and transmit the packet to a node of a next path. Thereafter, the ATSSS-enabled UE 320 that has received the packet may determine the packet distribution among the multi-accesses based on one or more pieces of INT information included in the packet.

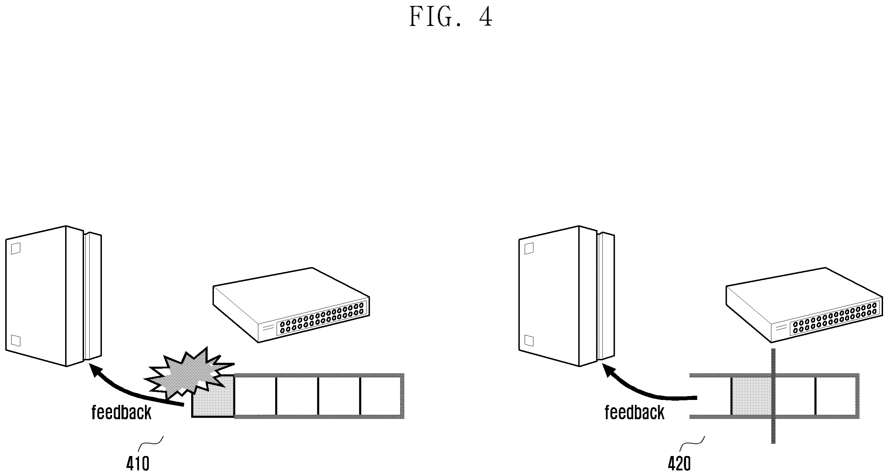

FIG. 4 is a diagram illustrating an end-to-end-based performance monitoring scheme and a network telemetry based monitoring scheme according to an embodiment of the present disclosure.

Referring to FIG. 410, reference numeral 410 is a diagram illustrating an end-to-end (E2E) transmission-based access network performance monitoring scheme according to an embodiment of the present disclosure.

The UE and the UPF may monitor access network performance based on the end-to-end (E2E) transmission, and determine a transmission path and a transmission ratio of a packet for each access network based on the result of the access network performance monitoring. Monitoring the E2E transmission-based access network performance refers to that the UPF and the UE corresponding to sections at both ends of the access network monitor the access network performance. The access network performance may include RTT that is a metric corresponding to latency for each access network and PLR that is a metric corresponding to the packet loss ratio.

More specifically, when the congestion occurring in wired or wireless bottleneck sections causes the increased buffer occupancy, or the packet loss due to buffer overflow, etc., on the network link exising on the packet transmission path, the UE and UPF may determine that the transmission quality of the corresponding access network has degraded. When the UE and the UPF determine that the transmission quality of the corresponding access network has degraded, the UE or the UPF may route or distribute packets to other access networks through the RTT and PLR monitoring for each access network.

The scheme for applying ATSSS technology through the E2E transmission-based network performance monitoring may only respond to congestion problems after the congestion problems have occurred and caused the degradation of transmission quality. The scheme for monitoring E2E transmission-based access network performance may consider distributing traffic to other accesses after the buffer occupancy has increased in the actual transmission section and the RTT has already increased significantly or the packet loss due to the buffer overflow has already occurred.

Referring to FIG. 420, reference numeral 420 illustrates a network telemetry-based access network performance monitoring scheme according to an embodiment of the present disclosure.

According to an embodiment of the present disclosure, the UE and the UPF may perform multi-access packet distribution based on real-time network telemetry technology.

More specifically, the UE and the UPF may collect information from network devices supporting network telemetry existing on the corresponding transmission path for each access transmission path, and monitor a packet buffer status in real time. Thereafter, based on the packet buffer status monitored for each access transmission path, when transmission quality degradation due to congestion is expected in a specific access path, the UE and the UPF may prevent the quality degradation through the packet distribution among the multi-accesses before the quality degradation problem occurs.

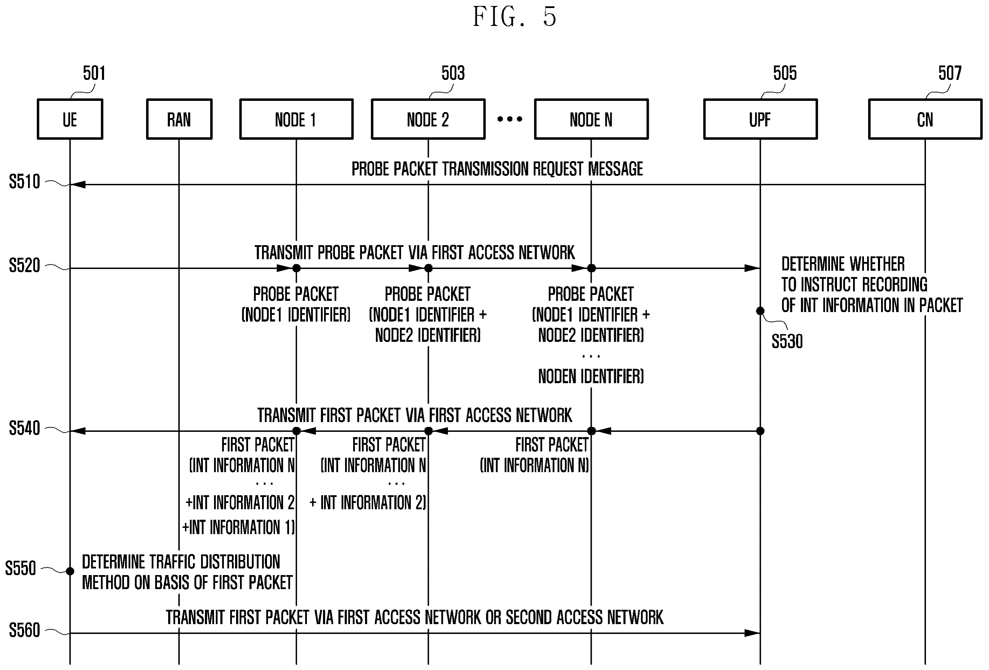

FIG. 5 is a diagram for describing multi-access distribution based on real-time network telemetry according to an embodiment of the present disclosure.

According to an embodiment of the present disclosure, the network entity may perform the ATSSS function based on the real-time network telemetry information. The network entity may include the user plane function (UPF) and the user equipment (UE).

Hereinafter, the description will be based on the in-band network telemetry (INT) scheme for acquiring the network status information in an in-band scheme, but this is only for helping the understanding of the invention, and the scope of the rights of the present invention is not limited thereto.

In order to perform the ATSSS function, the UPF and the UE may support the ATSSS proxy and the performance measurement function (PMF).

The ATSSS proxy may determine via which access network the traffic is forwarded, and may be supported by the UPF and the UE, respectively. More specifically, the ATSSS proxy (hereinafter referred to as "UPF-ATSSS proxy") operating in the UPF may determine via which access network the downlink traffic is forwarded for the MA PDU session. The ATSSS proxy (hereinafter referred to as "UE-ATSSS proxy") operating in the UE may determine via which access network the uplink traffic is forwarded.

The PMF may measure and monitor the network status in real time, and may be supported by the UPF and the UE, respectively. More specifically, the PMF (hereinafter, "UPF-PMF") operating in the UPF and the PMF (hereinafter, "UE-PMF") operating in the UE may identify each network status information based on one or more pieces of INT information.

The hop (or the term "node" may be used interchangeably) refers to network equipment ("network function" or "network entity") located on a path (uplink or downlink) through which a packet is transmitted, and may include network switches/routers in core network, transport devices in between core network and RAN, cell-side routers (CSR) in RAN, central unit (CU) and distributed unit (DU) instances in RAN.

The INT-capable node refers to a node or network equipment ("network function" or "network entity") that supports an INT function within a link through which a packet is transmitted.

The INT-capable packet refers to a packet to which INT information may be added, and the INT-capable node that has received the INT-capable packet transmits the INT information of each node added to the INT-capable packet.

The INT information (or "INT data") refers to data that is inserted into the INT-capable packet and forwarded, and may also be referred to as metadata. The INT information refers to the network status information at the time when the INT-capable packet passes through the INT-capable node, and the INT information may include at least one of buffer queue length, buffer occupancy, accumulate total bytes, timestamp, or buffer-related information (e.g., queue usage, queue congestion status).

In FIG. 5, the case of transmitting downlink traffic from a UPF 505 to a UE 501 is illustrated, but the scope of the present invention is not limited thereto, and the same may be applied to the uplink.

### 1. Discovery of network equipment (or function)

First, the UE and the UPF may discover network equipment (or function) supporting a network telemetry function within an access network transmission path.

The UE 501 may transmit a probe packet to discover a node 503 supporting the INT function within the access network transmission path.

More specifically, in step S510, the UE 501 may receive a probe packet transmission request message requesting the UPF to transmit a packet for discovering a node capable of recording the INT information from a control plane of a core network (CN) 507. Thereafter, in step S520, the probe packet may be transmitted for each access network and UE via the first access network currently connected based on the probe packet transmission request message. Thereafter, one or more INT-capable nodes existing on a path through which the probe packet passes may be discovered. The probe packet may be transmitted when the MA PDU session is generated, or may be transmitted periodically in consideration of the change in the transmission path within the access network.

### 2. Determination of whether to perform packet distribution based on network telemetry

In step S530, when receiving the probe packet, the UPF 505 may determine whether to perform packet distribution based on network telemetry based on the information included in the probe packet. More specifically, the UPF 505 may identify an INT-capable node ID list for the access network through which the packet is transmitted, and the ATSSS proxy of the UPF 505 may determine whether to instruct the recording of the INT information in a packet to be transmitted to the UE 501 based on the INT-capable node ID list.

Thereafter, when the ATSSS proxy of the UPF 505 determines to instruct the recording of the INT information in the packet to be transmitted to the UE 501, the ATSSS proxy may display and forward the indicator instructing the recording of the INT information in the packet to be transmitted to the UE. For example, the UPF 505 may display and forward an INT-capable bit(s) in a data packet transmitted to the UE 501.

In the case where the indicator instructing the recording of the INT information in the packet received by one or more INT-capable nodes existing within the first access network between the UPF 505 and the UE 501 is displayed, when the packet is transmitted to the INT-capable node of the next path existing in the corresponding link, the INT-capable node may add and forward its own INT information.

### 3. Collection of network telemetry information

As described above, when the UPF 505 adds the INT-capable bit(s) to the data packet and transmits the data packet, in step S540, one or more INT-capable nodes existing on the access path adds the respective pieces of INT information and transmits the packet. The added INT information is collected in the PMF of the UE 501, and based on the added INT information, the network telemetry information for the transmission path within each access network is identified and used for multi-access traffic distribution.

### 4. Traffic distribution based on collected network telemetry information

In step S550, the ATSSS proxy of the UE 101 may distribute and transmit traffic based on the collected network telemetry information. The UE 501 may perform the traffic distribution among the multi-accesses for the MA PDU session in the ATSSS proxy of the UE 501 based on the INT information collected for each multi-access path.

More specifically, by adding the network information (buffer queue length, buffer occupancy, accumulate total bytes, timestamp, etc.) at the time when the packet passes to the packet header on a hop-by-hop basis, the network information may be measured on a packet-by-packet basis, and the traffic may be distributed based on the network information measured on a packet-by-packet basis.

The INT-based multi-access packet distribution scheme may be implemented in various schemes according to requirements of a network operator. The multi-access traffic may be distributed in the following schemes.
1) Priority-based traffic forwarding scheme (Priority-based w/ INT: a single access with highest priority (w/o congestion))
   The priority-based multi-access traffic forwarding scheme refers to a scheme for distributing traffic to an access with the highest priority among access networks in which all queue lengths are less than or equal to a specific value in order to prevent a transmission quality degradation problem due to network congestion.
2) Queue length-based traffic forwarding scheme (Smallest queue length w/ INT: a single access with shortest queuing delay)
   A queue length-based traffic forwarding scheme refers to a scheme for distributing traffic to a location with the shortest average queue length among accesses in order to reduce delay through an optimal forwarding path for URLLC traffic.
3) Weight-based traffic forwarding scheme (Load balancing w/ INT: multiple accesses using weight-based rate control)

A weight-based traffic forwarding scheme refers to a scheme for forwarding traffic according to a weight ratio for each access network in order to distribute load and improve availability for each access network. The weight refers to a scheme for distributing traffic according to relative load = diff (accumulate total bytes) / diff (timestamp) ratio of each access network. However, the traffic distribution scheme described above is for helping understanding of the invention, and the scope of the rights of the present invention is not limited thereto.

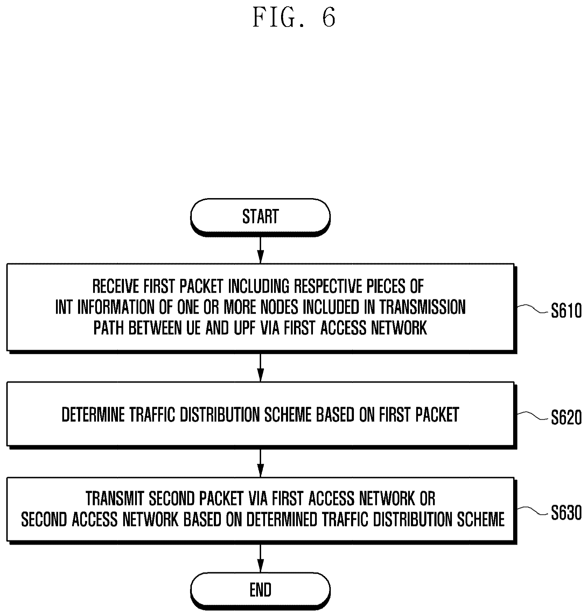

FIG. 6 is a flowchart illustrating the order in which the UE distributes traffic according to an embodiment of the present disclosure.

In FIG. 6, a description is made based on the downlink in which the UE receives data (packet or traffic) from the UPF, but the scope of the rights of the present invention is not limited thereto. For example, the uplink in which the UPF receives data (packet or traffic) from the UE may also be included in the scope of the rights of the present invention.

In step S610, the UE may receive a first packet including the respective pieces of INT information of one or more nodes included in the transmission path between the UE and the UPF via the first access network. The first access network may be a 3GPP access network or a non-3GPP access network. The node may include the INT-capable node. The INT information may include at least one of the buffer queue length, the buffer occupancy, the accumulate total bytes, or the timestamp. The UE may measure the INT information on a packet-by-packet basis.

In step S620, the UE may determine the traffic distribution scheme based on the received first packet. As described above, the traffic distribution scheme may use at least one of the priority-based traffic forwarding scheme, the queue length-based traffic forwarding scheme, or the weight-based traffic forwarding scheme.

In step S630, the UE may transmit a second packet via the first access network or the second access network based on the determined traffic distribution scheme.

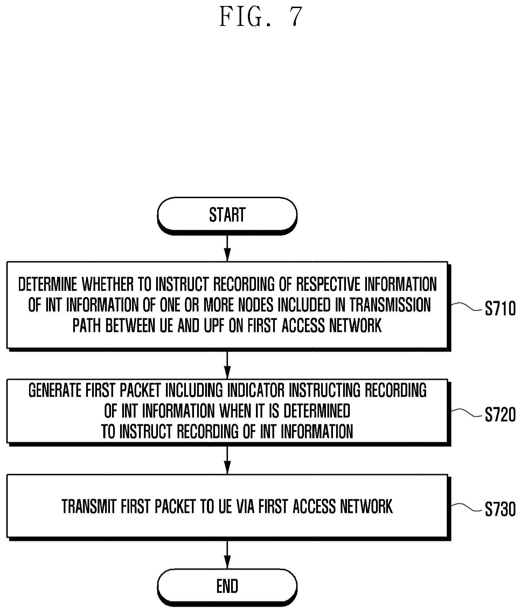

FIG. 7 is a flowchart illustrating the order in which the user plane function (UPF) transmits an in-band network telemetry (INT) packet according to an embodiment of the present disclosure.

In FIG. 7, a description is made based on the downlink in which the UPF transmits data (packet or traffic) to the UE, but the scope of the rights of the present invention is not limited thereto. For example, the uplink in which the UE transmits data (packet or traffic) to the UPF may also be included in the scope of the rights of the present invention.

In step S710, the UPF may determine whether to instruct the recording of the respective pieces of INT information of one or more nodes included in the transmission path between the UE and the UPF on the first access network. The method for instructing whether the UPF records the INT information will be described in detail below.

In step S720, when the UPF determines to instruct the recording of the INT information in the packet to be transmitted to the UE, the UPF generates the first packet including the indicator instructing the recording of the INT information.

In step S730, the UPF may transmit the first packet to the UE via the first access network.

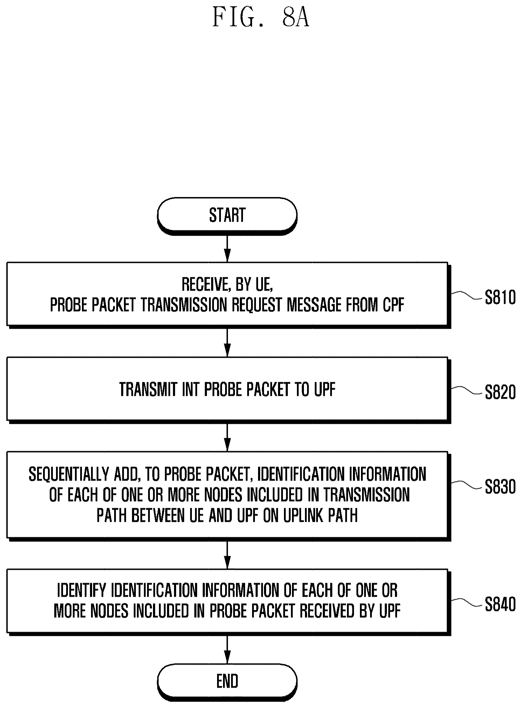

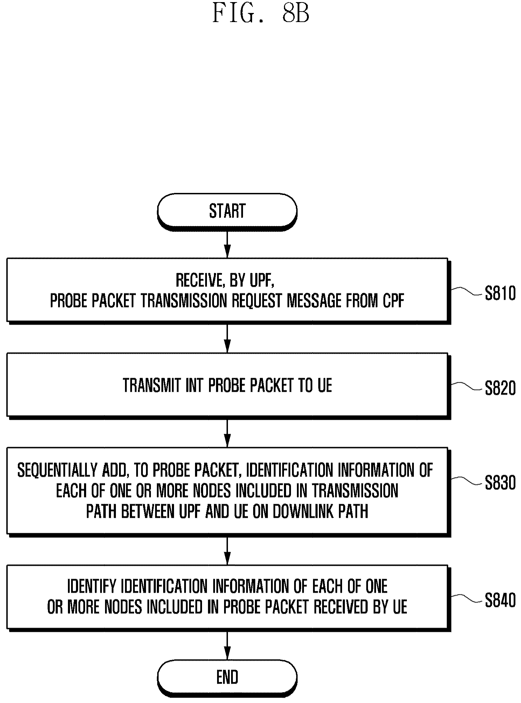

FIGS. 8A and 8B are flowcharts illustrating the order of transmitting the in-band network telemetry (INT) probe packet according to an embodiment of the present disclosure.

FIGS. 8A and 8B describe a scheme for discovering the INT-capable node for use in the 3GPP communication system of each of one or more nodes included in the transmission path between the UE and the UPF. The INT-capable node may include INT-capable network equipment and an INT-capable network function.

According to an embodiment of the present disclosure, the UPF may discover one or more INT-capable nodes (hereinafter, "discover the INT-capable node") included in a downlink network transmission path in order to transmit downlink data to the UE. In addition, the UE may discover one or more INT-capable nodes included in an uplink network transmission path in order to transmit uplink data to the UPF.

The UPF-PMF and the UE-PMF may discover one or more INT-capable nodes existing on the path through which the INT probe packet passes by transmitting the INT probe packet. The UPF and the UE may receive a request from the control plane function and transmit the INT probe packet for each access network and UE currently transmitting and receiving the packet. The INT probe packet may be transmitted when the MA PDU session is generated, or may be transmitted periodically in consideration of the change in the transmission path within the access network.

When one or more INT-capable nodes existing on the UPF and the UE path receive the INT probe packet, the one or more INT-capable nodes may add an INT-capable node ID corresponding to its own identifier to the INT probe packet and transmit the INT probe packet. The scheme for assigning, by each INT-capable node, the INT-capable node ID identifier to the INT probe packet may be declared in the form of concatenating an identifier assigned by a method defined by a network administrator at each node to a global RAN node ID assigned to each access network. However, the scheme for assigning, by each of the INT-capable nodes, an INT-capable node ID identifier to the INT probe packet is not limited thereto, and various schemes are possible.

After receiving the INT probe packet, the UPF and the UE may identify the INT-capable node ID list for the path to which the INT probe packet is transmitted, and identify the INT-capable node existing on the path. The UPF-proxy and the UE-proxy may determine whether to instruct the INT-capable node to record the INT information so that the INT information-based traffic distribution may be performed.

FIG. 8A is a flowchart illustrating the order in which the user equipment (UE) transmits the in-band network telemetry (INT) probe packet according to an embodiment of the present disclosure.

In step S810, the UE may receive an INT probe packet transmission request message from the control plane function. More specifically, the UE may receive, from a second network entity performing the control plane function (CPF), the probe packet transmission request message requesting to transmit the packet to the UPF for discovering the node (INT-capable node) capable of recording the INT information.

In step S820, the UE may transmit the INT probe packet to the UPF based on the probe packet transmission request message.

In step S830, one or more INT-capable nodes included in a path within the access network between the UE and the UPF may sequentially add identification information of each INT-capable node to the probe packet when receiving the INT probe packet.

In step S840, the UPF that has received the probe packet may identify one or more INT-capable nodes included in the path between the UE and the UPF. More specifically, after receiving the INT probe packet, the UPF may identify the INT-capable node ID list for the path to which the INT probe packet is transmitted, and identify the INT-capable node existing on the path. Thereafter, the ATSSS proxy existing within the UPF may determine whether to instruct the INT-capable node to record the INT information in the packet to be transmitted to the UE so that the UE may perform the INT information-based traffic distribution.

FIG. 8B is a flowchart illustrating the order in which the user plane function (UPF) transmits the in-band network telemetry (INT) probe packet according to an embodiment of the present disclosure.

In step S850, the UPF may receive an INT probe packet transmission request message from the control plane function. More specifically, the UPF may receive, from a second network entity performing the control plane function (CPF), the probe packet transmission request message requesting to transmit the packet to the UE for discovering the node (INT-capable node) capable of recording the INT information.

In step S860, the UPF may transmit the INT probe packet to the UE based on the probe packet transmission request message.

In step S870, one or more INT-capable nodes included in a path within the access network between the UPF and the UE may sequentially add identification information of each INT-capable node to the probe packet when receiving the INT probe packet.

In step S880, the UE that has received the probe packet may identify one or more INT-capable nodes included in the path between the UPF and the UE.

More specifically, after receiving the INT probe packet, the UE may identify the INT-capable node ID list for the path to which the INT probe packet is transmitted, and identify the INT-capable node existing on the path. Thereafter, the ATSSS proxy existing within the UE may determine whether to instruct the INT-capable node to record the INT information in the packet to be transmitted to the UPF so that the UPF may perform the INT information-based traffic distribution.

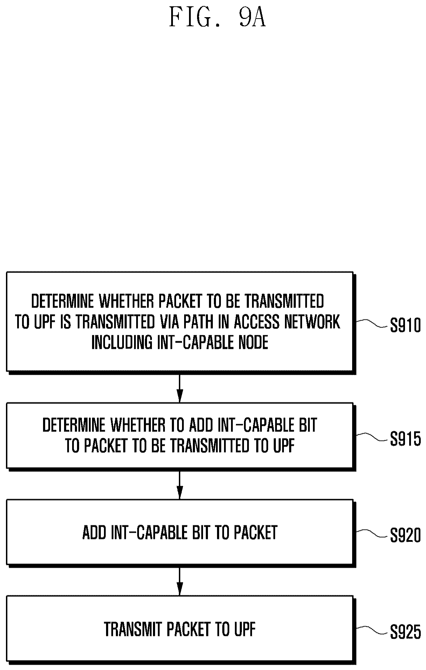

FIGS. 9A to 9C are flowcharts for describing the order in which the user plane function (UPF) and the user equipment (UE) instruct the recording of the in-band network telemetry (INT) information according to an embodiment of the present disclosure.

The ATSSS proxy of the UPF and the UE may determine, based on the information included in the INT probe packet, whether to instruct one or more INT-capable nodes existing on the path between the UPF and the UE to record the INT information.

When it is determined that one or more INT-capable node existing on the path between the UPF and the UE instruct the recording of the INT information, the UPF and the UE may display the INT-capable bit(s) in the packet to be transmitted and transmit the packet (hereinafter, referred to as an "INT-capable packet"). One or more INT-capable nodes existing on the path within the access network of the UPF and the UE may add the INT information to the INT-capable packet and transmit the INT-capable packet when the INT-capable packet is transmitted to the next node on the path if the INT-capable bit is displayed in the received INT-capable packet.

According to an embodiment of the present disclosure, in order to resolve the overhead problem occurring while collecting the INT information, instead of adding the INT information to all the packets transmitted by the UPF and the UE, an INT header may be selectively added by the following method.

More specifically, the UPF and the UE may selectively add the INT-capable bit(s) to each packet according to conditions for each traffic (or MA PDU session). The method for determining whether the UPF and the UE add the INT-capable bit(s) to each packet of the traffic (or per-session MA PDU) may be as follows.

First, when the UPF and the UE add the INT-capable bit(s), the UPF and the UE may dynamically select the necessary INT capability among the INT information to be added by the INT node.

More specifically, the UPF may add the INT-capable bit(s) to selectively perform the INT-based traffic distribution on a packet-by-packet basis for a specific session or specific QoS flow traffic for incoming traffic. In this case, the INT-capable nodes that receive a packet including the INT-capable bit(s) may dynamically select INT capability to be added among the INT information to be added to the packet. Regarding the packet to be transmitted to the UPF, the UE may dynamically select the INT capability to be added among the INT information to be added to the packet by the INT-capable nodes that receive the packet including the INT-capable bit(s).

Second, the UPF and the UE may control the frequency at which the INT-capable bit(s) is added to the packet for each path.

More specifically, the UPF and the UE may prevent the network transmission bottleneck phenomenon occurring due to the amount (metadata) of INT information by adding the INT header for each access according to the current network and wireless channel conditions and controlling the transmission frequency (INT probability) or P_int ([0, 1]). For example, the UPF may probabilistically configure (or instruct) whether the INT may be added, i.e., configure (or instruct) the INT-capable bit(s) in the packet, based on a P_int value configured for each traffic type during the packet transmission. For packets in which the INT-capable node is configured to record the INT information, one or more INT-capable nodes that have received the packets may add the INT information. The INT probability or the P_int value is included in MAR and may be configured for each session or QoS flow.

FIG. 9A is a flowchart illustrating the order in which the user equipment (UE) instructs recording of in-band network telemetry (INT) information according to an embodiment of the present disclosure.

In step S910, the UE may determine whether the packet to be transmitted to the UPF is transmitted via the path within the access network including the INT-capable node.

In step S915, the UE may determine whether to add the indicator instructing the recording of the INT information in the packet to be transmitted to the UPF. More specifically, when the UE determines that the packet to be transmitted to the UPF is transmitted via the path within the access network including the INT-capable node, the UE may dynamically select the information to be added by the INT-capable node while adding the INT-capable bit to the packet. Alternatively, the UE may determine whether to add a per-packet INT-capable bit based on the P_int or the probability (or frequency) information.

In step S920, when the UE determines to add the indicator instructing the recording of the INT information in the packet to be transmitted to the UPF, the UE may add the indicator instructing the recording of the INT information in the packet.

In step S925, the UE may transmit, to the UPF, the packet to which the indicator instructing the recording of the INT information is added.

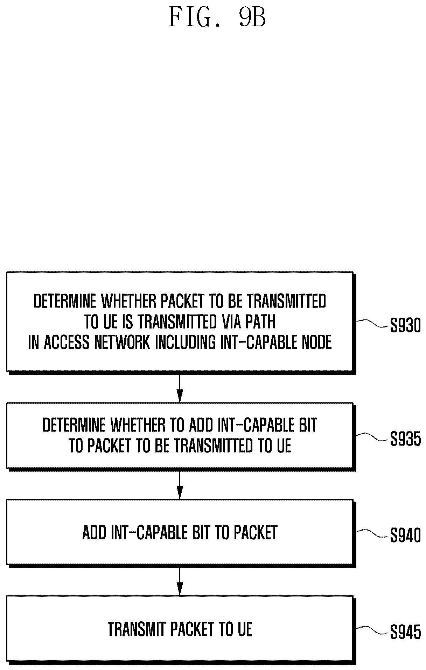

FIG. 9B is a flowchart illustrating the order in which the user plane function (UPF) instructs the recording of the in-band network telemetry (INT) information according to an embodiment of the present disclosure.

In step S930, the UPF may determine whether the packet to be transmitted to the UE is transmitted via the path within the access network including the INT-capable node.

In step S935, the UPF may determine whether to add the indicator instructing the recording of the INT information in the packet to be transmitted to the UE. More specifically, when the UPF determines that the packet to be transmitted to the UE is transmitted via the path within the access network including the INT-capable node, the UPF may dynamically select the information to be added by the INT-capable node while adding the INT-capable bit to the packet. Alternatively, the UPF may determine whether to add the per-packet INT-capable bit based on the P_int or the probability (or frequency) information.

In step S940, when the UPF determines to add the indicator instructing the recording of the INT information in the packet to be transmitted to the UE, the UPF may add the indicator instructing the recording of the INT information in the packet.

In step S945, the UPF may transmit, to the UE, the packet to which the indicator instructing the recording of the INT information is added.

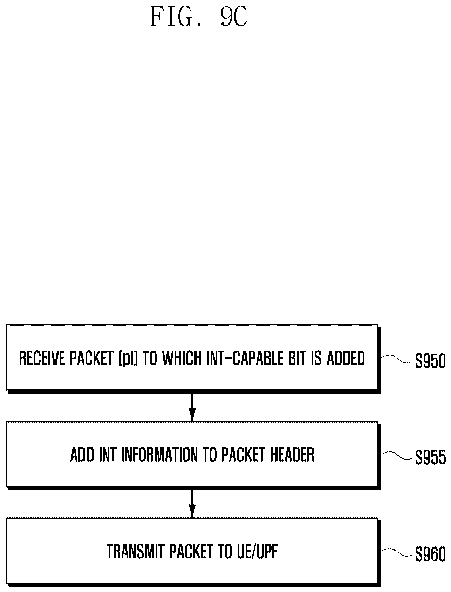

FIG. 9C is a flowchart for describing the order in which the in-band network telemetry (INT)-capable node adds the INT information according to an embodiment of the present disclosure.

In step S950, the INT-capable node existing on the path between the UPF and the UE may receive the packet including the INT-capable bit.

In step S955, the INT-capable node may add the INT information to the packet.

In step S960, the INT-capable node may add its own the INT information and then transmit the packet to the INT-capable node, and sequentially add the INT information of each INT-capable node to the packet and then transmit the packet to the UE and the UPF.

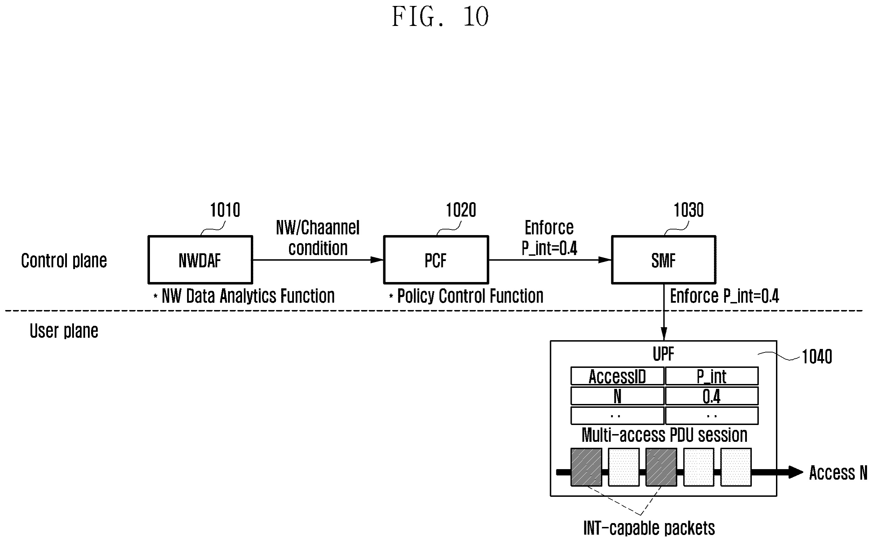

FIG. 10 is a diagram illustrating a process of instructing the user plane function (UPF) and the user equipment (UE) to record the in-band network telemetry (INT) information according to another embodiment of the present disclosure.

FIG. 10 is a diagram illustrating an embodiment in which the UPF and the UE determine whether to add the INT-capable bit.

As described above, when the UPF and the UE add the INT-capable bit(s), the UPF and the UE may dynamically select the necessary INT capability among the pieces of INT information to be added by the INT node, and control the frequency at which the INT-capable bit(s) is added to the packet. The UPF and the UE may be configured with the INT capability information and the INT probability information.

According to an embodiment of the present disclosure, the UPF may add the INT-capable bit(s)-related information to the multi-access rule (MAR) as the method for determining whether to display and forward the INT-capable bit(s) for an MA PDU session.

More specifically, the UPF may receive, from an SMF, the multi-access rule (MAR) information for distributing the downlink traffic between the 3GPP access and the non-3GPP access in the ATSSS system. The MAR may include the INT-capable bit(s)-related information as follows. The INT-capable bit(s)-related information may include at least one of a list of INT capability or an INT probability, and the UE may dynamically select the INT information to be added by the INT node based on the list of INT capability, and control the frequency at which the INT-capable bit(s) is added to the packet based on the INT probability.

**[Table 1]**

| **Attribute** | | **Description** |
|---|---|---|
| N4 Session ID | | Identifies the N4 session associated to this MAR. |
| Rule ID | | Unique identifier to identify this rule. |
| Steering functionality | | Indicates the applicable traffic steering functionality: Values "MPTCP functionality", "ATSSS-LL functionality". |
| Steering mode | | Values "Active-Standby", "Smallest Delay", "Load Balancing" or "Priority-based". |
| Steering Mode Indicator | | Indicates either autonomous load-balance operation or UE-assistance operation if steering mode is set to "Load Balancing". |
| Threshold values | | A Maximum RTT and/or a Maximum Packet Loss Rate |
| Per-Access Forwarding Action information | Forwarding Action Rule ID | The Forwarding Action Rule ID identifies a forwarding action that has to be applied. |
| | Weight | Identifies the weight for the FAR if steering mode is "Load Balancing" |
| | Priority | Values "Active or Standby" or "High or Low" for the FAR |
| | List of INT capability | List of INT metadata fields ("INT-capable node ID", "Queue length", "Buffer occupancy""Timestamp", "Accumulate total bytes") that need to be collected and used for multi-access PDU sessions |
| | INT probability | Probability of adding INT header |
| | List of Usage Reporting Rule ID(s) | Every Usage Reporting Rule ID identifies a measurement action that has to be applied. |

The per-access forwarding action information in the MAR may include the list of INT capability and INT probability information. The list of INT capability refers to the list of INT information to be used and collected in the multi-access PDU sessions (MA PDU sessions). The list of INT capability may include at least one of the pieces of information related to "INT-capable node ID", "length", "buffer occupancy", "timestamp", or "accumulate total bytes" that may be used for MA PDU sessions.

The INT probability refers to the information on the frequency at which the INT capability bit or the INT header is added to the packet.

The packet detection rule (PDR) may declare the range to which the MAR is applied. Therefore, the UPF may selectively perform INT-based multi-access packet distribution for the specific session or the specific QoS flow traffic for the incoming traffic, and may dynamically select a desired INT capability.

According to another embodiment of the present disclosure, the UE may add the INT-capable bit(s) information to a UE route selection policy (URSP) as a method for determining whether to display and forward the INT-capable bit(s) for a specific packet.

More specifically, the UE may receive URSP-related information. The URSP may include the INT-capable bit(s)-related information as follows. The INT-capable bit(s)-related information may include at least one of a list of INT capability or an INT probability, and the UE may dynamically select the INT information to be added by the INT node based on the list of INT capability, and control the frequency at which the INT-capable bit(s) is added to the packet based on the INT probability.

**[Table 2]**

| **Information name** | **Description** |
|---|---|
| Route Selection Descriptor Precedence | Determines the order in which the Route Selection Descriptors are to be applied. |
| **Route selection components** | This part defines the route selection components |
| SSC Mode Selection | One single value of SSC mode.(NOTE 5) |
| Network Slice Selection | Either a single value or a list of values of S-NSSAI(s). |
| DNN Selection | Either a single value or a list of values of DNN(s). |
| PDU Session Type Selection | One single value of PDU Session Type |
| Non-Seamless Offload indication | Indicates if the traffic of the matching application is to be offloaded to non-3GPP access outside of a PDU Session. |
| ProSe Layer-3 UE-to-Network Relay Offload indication | Indicates if the traffic of the matching application is to be sent via a ProSe Layer-3 UE-to-Network Relay outside of a PDU session. |
| Access Type preference | Indicates the preferred Access Type (3GPP or non-3GPP or Multi-Access) when the UE establishes a PDU Session for the matching application. |
| List of INT capability | List of INT metadata fields ("INT-capable node ID", "Queue length", "Buffer occupancy", "Timestamp", "Accumulate total bytes") that need to be collected and used for multi-access PDU sessions |
| INT probability | Probability of adding INT header |
| PDU Session Pair ID | An indication shared by redundant PDU Sessions as described in clause 5.33.2.1 of TS 23.501 [2]. |
| RSN | The RSN as described in clause 5.33.2.1 of TS 23.501 [2]. |
| **Route Selection Validation Criteria**(NOTE 6) | This part defines the Route Validation Criteria components |
| Time Window | The time window when the matching traffic is allowed. |
| | The RSD is not considered to be valid if the current time is not in the time window. |
| Location Criteria | The UE location where the matching traffic is allowed. |
| | The RSD rule is not considered to be valid if the UE location does not match the location criteria. |

The list of INT capability refers to a list of INT metadata fields to be used and collected for the multi-access PDU session(s). The list of INT capability may include at least one of the pieces of information related to "INT-capable node ID", "queue length", "buffer occupancy", "timestamp", or "accumulate total bytes" to be used for the multi-access PDU session. The INT probability means information on the frequency at which the INT header is added.

The URSP is applicable when access type preference of the UE is multi-access, and may selectively perform the INT-based multi-access packet distribution for specific UE traffic, and dynamically select the desired INT capability.

According to an embodiment of the present disclosure, the UPF may receive MAR information, and the UE may receive URSP information. As described above, the MAR information and the URSP information may include the INT-capable bit(s)-related information, and the INT-capable bit(s)-related information may include at least one of the list of INT capability or the INT probability. In this case, the scheme by which the UPF receives MAR information and the UE receives URSP information may be performed in various schemes, including a scheme for forwaring MAR information and URSP information in the form of Non-Access-Stratum (NAS) protocol messages.

FIG. 10 is a diagram illustrating a process in which the UPF receives the INT probability information according to another embodiment of the present disclosure.

Specifically, a NW data analytics function (NWDAF) 1010, which collects network channel status information, may forward frequency information (hereinafter, "INT probability information") on whether the UPF should add the INT-capable bit to the packet to be transmitted to the UE to a policy control function (PCF) 1020 that manages a per-session transmission control policy. The PCF 1020 may configure a session management function (SMF) 1030 with whether to add the INT-capable bit and the INT probability information for each session and QoS flow, based on the importance of the session and the QoS flow. Thereafter, the SMF 1030 may forward the INT probability information to the UPF 1040. Thereafter, the UPF 1040 may add the INT-capable bit to the packet to be transmitted to the UE based on the received probability information.

For example, when the UPF 1040 is configured with the P_int (or probability) value of 0.4 from the SMF 1030, the UPF 1040 may add the INT-capable bit to only 2 out of every 5 packets to be transmitted to the UE and transmit 2 packets.

Whether the UPF should add the INT-capable bit may be determined in various schemes, and the scope of the rights of the present invention is not limited to the scheme described below. For example, when a service-based interface (SBI) support of the UPF is implemented, direct provisioning may be performed from the PCF 1020 to the UPF 1030.

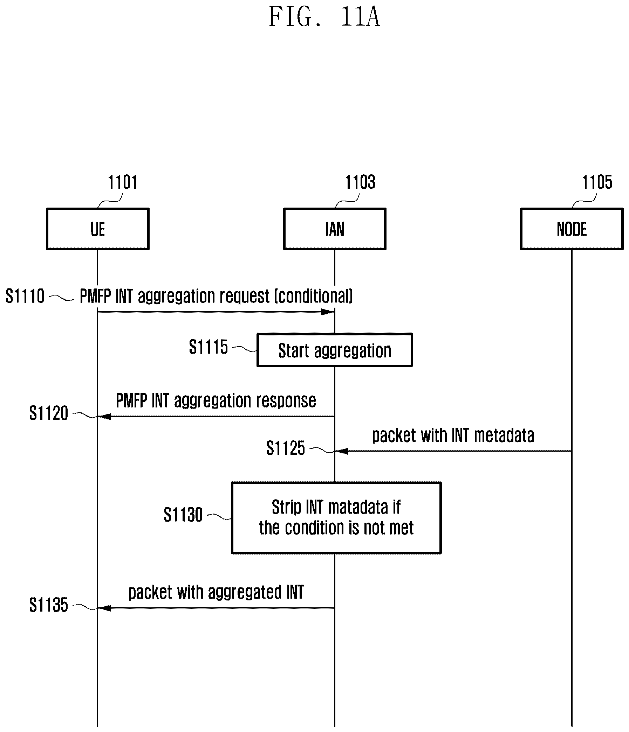

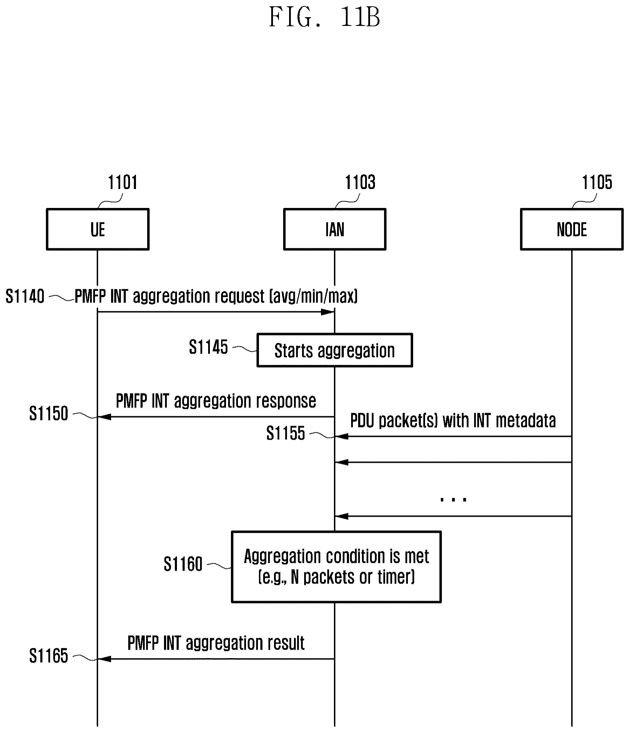

FIGS. 11A and 11B are diagrams for describing a method for collecting, by a UE and a user plane function (UPF), in-band network telemetry (INT) information according to an embodiment of the present disclosure.

As described above, the UPF or the UE may add the INT-capable bit(s) to the header of the packet and transmit the header of the packet. One or more INT-capable nodes existing on the access path of the packet may add the respective pieces of INT information to the INT-capable bit(s) and transmit the INT-capable bit(s). Thereafter, the performance measurement function (PMF) existing in the UPF and the UE may collect the added INT information, and based on the collected INT information, may identify the network telemetry information for the transmission path within each access network. Thereafter, based on the network telemetry information for the transmission path in the access network, the multi-access traffic distribution may be performed.

FIGS. 11A and 11B are diagrams illustrating a method for preprocessing one or more pieces of INT information (INT metadata) added to each of the one or more INT-capable node existing in the network access before being forwarded to the wireless link in a situation where the INT-capable packets are transmitted from the UPF to the UE (downlink).

According to an embodiment of the present disclosure, the UE may prevent excessive consumption of wireless channel resources by preprocessing the INT metadata before being forwarded to the wireless link and forwarding only necessary information to the wireless link.

For example, the UE may request an INT aggregation node (IAN) to aggregate the INT metadata. The IAN may be designated as a last-mile network node within the access network. Specifically, the 5G distributed RAN structure may include a distributed unit (DU) node immediately preceding the radio unit (RU) node. The UE may designate an IAN to process INT metadata and perform aggregation operations. The UE may designate the IAN to process INT metadata and request the IAN to perform aggregation operations.

The IAN node may perform the aggregation operation on the INT metadata for each INT-capable node existing on the path through which the INT-capable packet is transmitted. Thereafter, the result of performing the aggregation operation may be forwarded to the UE. The aggregation method may include the following methods.

Aggregation methods:
- Conditional-based operation

For example, the IAN node may transmit the INT metadata only when the INT metadata satisfies a specific condition.)
- Average/Min/Max value-based

For example, the IAN node may transmit an average value (average), a minimum value (min), or a maximum value of one or more INT metadata.

According to an embodiment of the present disclosure, the UE may perform an aggregation operation request to the IAN node. Hereinafter, the method in which the UE and the IAN node perform the aggregation operation request using the performance measurement function protocol used by the PMF for performance measurement and monitoring purposes will be mainly described. However, this is only described to help understanding of the invention, and the scope of the rights of the present invention is not limited thereto, and various protocols may be used.

According to an embodiment of the present disclosure, the UE may transmit the INT aggregation request to the IAN through a PMFP protocol. When the IAN may support the corresponding scheme, the IAN may transmit an INT aggregation response to the UE and start aggregation. Alternatively, the IAN may start the aggregation operation and transmit the INT aggregation response. The IAN may attach an aggregated INT header to each PDU packet according to the aggregation scheme, or may attach an aggregated INT header to every N PDU packets and transmit the N PDU packets.

FIG. 11A is a diagram illustrating a procedure for performing the INT aggregation operation according to an embodiment of the present disclosure.

In step S1110, a UE 1101 may transmit an INT aggregation request message to the IAN 1103. The INT aggregation request message may include information on a condition for performing the IAN aggregation only when the INT metadata satisfies a specific condition.

In step S1115, the IAN 1103 may start the aggregation operation.

In step S1120, the IAN 1103 may transmit the INT aggregation response message. The INT aggregation response message may include contents that the IAN 1003 may support the INT aggregation or contents that the aggregation operation has started.

In step S1125, the IAN 1103 may receive a packet including the INT metadata from a node 1105 within the access path.

In step S1130, the IAN 1103 may determine whether the INT metadata satisfies a specific condition. When the INT metadata does not satisfy a specific condition, the IAN 1103 may not transmit the INT metadata to the UE 1101.

In step S1135, the IAN 1103 may transmit the INT metadata satisfying the specific condition to the UE 1101.

FIG. 11B is a diagram illustrating a procedure for performing the INT aggregation operation according to another embodiment of the present disclosure.

In step S1140, the UE 1101 may transmit the INT aggregation request message to the IAN 1103. The INT aggregation request message may include information on a condition for performing the IAN aggregation only when the plurality of packets satisfy a specific condition. The INT aggregation request message may include information requesting to forward any one of an average value, a minimum value, and a maximum value for a plurality of INT packets.

In step S1145, the IAN 1103 may start the aggregation operation.

In step S1150, the IAN 1103 may transmit the INT aggregation response message. The INT aggregation response message may include contents that the IAN 1003 may support the INT aggregation or contents that the aggregation operation has started.

In step S1155, the IAN 1103 may receive a plurality of packets including the INT including from the node 1105 within the access path.

In step S1160, the IAN 1103 may determine whether the plurality of packets satisfy a specific condition. The specific condition may be information on the plurality of packets or a condition about a timer. When the plurality of packets do not satisfy the specific condition, the IAN 1103 may not perform the aggregation operation.

In step S1165, the IAN 1103 may perform the aggregation operation when the specific condition is satisfied and then transmit an INT aggregation result message. The IAN 1103 may attach the aggregated INT header to each PDU packet according to the aggregation method, or may attach then aggregated INT header to every N PDU packets and transmit the N PDU packets to the UE 1101.

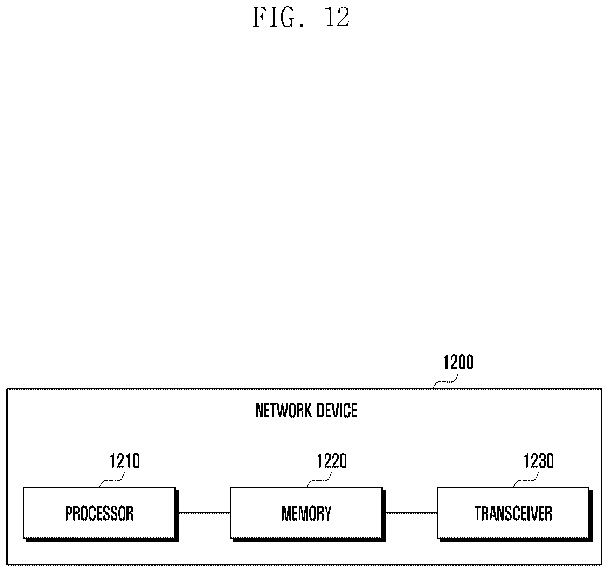

FIG. 12 is a diagram illustrating a configuration of a network device according to embodiments of the present disclosure.

Referring to FIG. 12, the network device may include a processor 1210, a memory 1220, and a transceiver 1230. Here, the network device may correspond to an in-band network telemetry function (INTF). Alternatively, the network device may correspond to a user plane function (UPF). Alternatively, the INTF and the UPF may be implemented together in the network device.

The processor 1210 may control the overall operation of the network device. For example, the processor 1210 may control the transceiver 1230 to transmit and receive signals. In addition, the processor 1210 may perform functions of a protocol stack required by a communication standard. To this end, the processor 1210 may include at least one processor. In addition, the processor 1210 may control the network device to perform the function of the INTF described above.

The memory 1220 may store data such as basic programs, application programs, and configuration information for the operation of the network device. The memory 1220 may be composed of a volatile memory, a non-volatile memory, or a combination of the volatile memory and the non-volatile memory. The memory 1220 may provide stored data at the request of the processor 1210.

The transceiver 1230 may perform functions for transmitting and receiving signals via a wired channel or a wireless channel. For example, the transceiver 1230 may perform a conversion function between a baseband signal and a bit string according to a physical layer standard of a system. For example, when transmitting data, the transceiver 1230 may generate complex symbols by encoding and modulating a transmission bit string. In addition, when receiving data, the transceiver 1230 may restore a baseband signal to a reception bit string through demodulation and decoding. In addition, the transceiver 1230 may up-convert a baseband signal into a radio frequency (RF) band signal and then transmit the RF band signal via an antenna, and may down-convert the RF band signal received via the antenna into the baseband signal. To this end, the transceiver 1230 may include a transmitting filter, a receiving filter, an amplifier, a mixer, an oscillator, a digital-to-analog converter (DAC), an analog-to-digital converter (ADC), etc. In addition, the transceiver 1230 may include an antenna unit. The transceiver 1230 may include at least one antenna array composed of a plurality of antenna elements. In terms of hardware, the transceiver 1230 may be composed of digital and analog circuits (e.g., radio frequency integrated circuit (RFIC)). Here, the digital and analog circuits may be implemented in one package. In addition, the transceiver 1230 may include a plurality of RF chains. In addition, the transceiver 1230 may transmit and receive signals. To this end, the transceiver 1230 may include at least one transceiver.

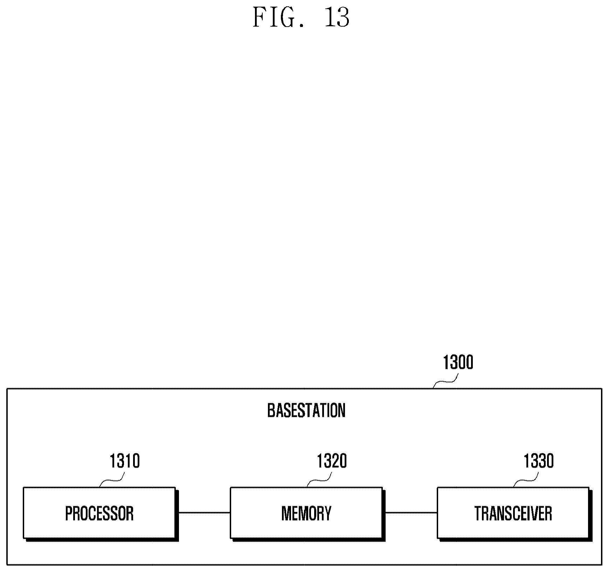

FIG. 13 is a diagram illustrating a configuration of a base station according to embodiments of the present disclosure. Referring to FIG. 13, the base station may include a processor 1310, a memory 1320, and a transceiver 1330.

The processor 1310 may control the overall operation of the base station. For example, the processor 1310 may control the transceiver 1330 to transmit and receive signals. In addition, the processor 1310 may perform functions of a protocol stack required by a communication standard. To this end, the processor 1310 may include at least one processor. In addition, the processor 1310 may control the base station to perform operations according to the embodiments described above.

The memory 1320 may store data such as basic programs, application programs, and configuration information for the operation of the base station. The memory 1320 may be composed of a volatile memory, a non-volatile memory, or a combination of the volatile memory and the non-volatile memory. The memory 1320 may provide stored data at the request of the processor 1310.

The transceiver 1330 may perform functions for transmitting and receiving signals via a wired channel or a wireless channel. For example, the transceiver 1330 may perform a conversion function between a baseband signal and a bit string according to a physical layer standard of a system. For example, when transmitting data, the transceiver 1330 may generate complex symbols by encoding and modulating a transmission bit string. In addition, when receiving data, the transceiver 1330 may restore a baseband signal to a reception bit string through demodulation and decoding. In addition, the transceiver 1330 may up-convert a baseband signal into a radio frequency (RF) band signal and then transmit the RF band signal via an antenna, and may down-convert the RF band signal received via the antenna into the baseband signal. To this end, the transceiver 1330 may include a transmitting filter, a receiving filter, an amplifier, a mixer, an oscillator, a digital-to-analog converter (DAC), an analog-to-digital converter (ADC), etc. In addition, the transceiver 1330 may include an antenna unit. The transceiver 1330 may include at least one antenna array composed of a plurality of antenna elements. In terms of hardware, the transceiver 1330 may be composed of digital and analog circuits (e.g., radio frequency integrated circuit (RFIC)). Here, the digital and analog circuits may be implemented in one package. In addition, the transceiver 1330 may include a plurality of RF chains. In addition, the transceiver 1330 may transmit and receive signals. To this end, the transceiver 1330 may include at least one transceiver.

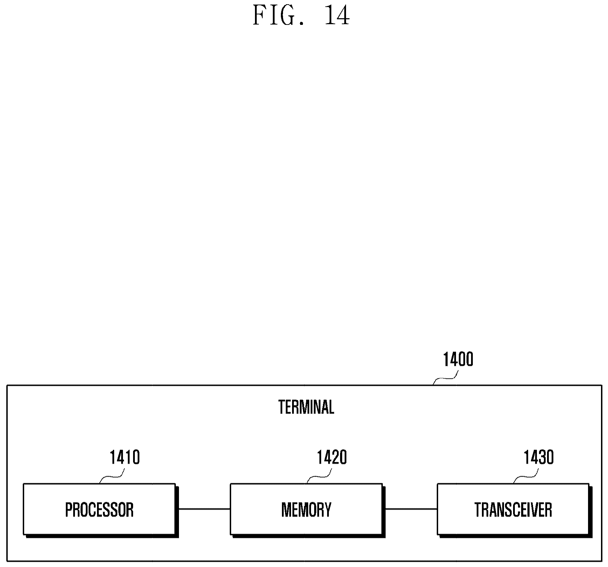

FIG. 14 is a diagram illustrating a configuration of a terminal according to embodiments of the present disclosure. Referring to FIG. 14, the terminal may include a processor 1410, a memory 1420, and a transceiver 1430.

The processor 1410 may control the overall operation of the terminal. For example, the processor 1410 may control the transceiver 1430 to transmit and receive signals. In addition, the processor 1410 may perform functions of a protocol stack required by a communication standard. To this end, the processor 1410 may include at least one processor. In addition, the processor 1410 may control the terminal to perform operations according to the embodiments described above.

The memory 1420 may store data such as basic programs, application programs, and configuration information for the operation of the terminal. The memory 1420 may be composed of a volatile memory, a non-volatile memory, or a combination of the volatile memory and the non-volatile memory. The memory 1420 may provide stored data at the request of the processor 1410.

The transceiver 1430 may perform functions for transmitting and receiving signals via a wired channel or a wireless channel. For example, the transceiver 1430 may perform a conversion function between a baseband signal and a bit string according to a physical layer standard of a system. For example, when transmitting data, the transceiver 1430 may generate complex symbols by encoding and modulating a transmission bit string. In addition, when receiving data, the transceiver 1430 may restore a baseband signal to a reception bit string through demodulation and decoding. In addition, the transceiver 1430 may up-convert a baseband signal into a radio frequency (RF) band signal and then transmit the RF band signal via an antenna, and may down-convert the RF band signal received via the antenna into the baseband signal. To this end, the transceiver 1430 may include a transmitting filter, a receiving filter, an amplifier, a mixer, an oscillator, a digital-to-analog converter (DAC), an analog-to-digital converter (ADC), etc. In addition, the transceiver 1430 may include an antenna unit. The transceiver 1430 may include at least one antenna array composed of a plurality of antenna elements. In terms of hardware, the transceiver 1430 may be composed of digital and analog circuits (e.g., radio frequency integrated circuit (RFIC)). Here, the digital and analog circuits may be implemented in one package. In addition, the transceiver 1430 may include a plurality of RF chains. In addition, the transceiver 1430 may transmit and receive signals. To this end, the transceiver 1430 may include at least one transceiver.

The methods proposed in the present disclosure may be executed by combining part or all of the contents included in each embodiment within the scope that does not harm the essence of the invention.

The embodiments disclosed in this specification and drawings are merely presented as specific examples to easily explain the technical content of the present disclosure and to aid in understanding the present disclosure, and are not intended to limit the scope of the present disclosure. In other words, it is obvious to a person having ordinary knowledge in the technical field to which the present disclosure pertains that other modifications based on the technical idea of the present disclosure can be implemented.

In addition, the preferred embodiment of the present disclosure has been disclosed in the present specification and drawings, and although specific terms are used, this is merely used in a general sense to easily describe the technical content of the present disclosure and to help understanding of the present disclosure, but is not intended to limit the scope of the present disclosure. It is obvious to those of ordinary skill in the art to which the present disclosure pertains that other modifications based on the technical idea of the present disclosure can be implemented in addition to the embodiments disclosed herein.

## Claims

1. A method performed by a terminal in a wireless communication system, comprising:
receiving, via a first access network from a first network entity performing a user plane function (UPF), a first packet including respective pieces of in-band network telemetry (INT) information of one or more nodes included in a transmission path between the terminal and the first network entity;
determining a traffic distribution scheme based on the first packet including the one or more pieces of INT information; and
transmitting a second packet to the UPF via the first access network or a second access network based on the determined traffic distribution scheme.

2. The method of claim 1, further comprising:
receiving, from a second network entity performing a control plane function (CPF), a probe packet transmission request message requesting to transmit a packet for discovering a node recording the INT information to the first network entity performing the UPF; and
transmitting an INT probe packet to the first network entity performing the UPF based on the probe packet transmission request message,
wherein the INT information includes at least one of a buffer queue length, a buffer occupancy, an accumulate total byte, a timestamp, or congestion experienced information for the node.

3. The method of claim 1, further comprising:
transmitting, to any one of the one or more nodes, a combination request message requesting to combine the INT information of each of the at least one node,
wherein the combination of the INT information is performed when the INT information satisfies a specific condition, or the INT information is combined by any one of a combination method by an average value of the INT information, a combination method by a minimum value of the INT information, or a combination method by a maximum value of the INT information.

4. The method of claim 1, wherein the traffic distribution scheme is determined by at least one of a priority of traffic, a queue length of the traffic, or a weight of the traffic.

5. A method performed by a first network entity performing a user plane function (UPF) in a wireless communication system, the method comprising:
determining whether each of one or more nodes included in a transmission path between a terminal and the first network entity on a first access network instructs recording of in-band network telemetry (INT) information;
generating a first packet including an indicator instructing the recording of the INT information when it is determined to instruct the recording of the INT information; and
transmitting the generated first packet to the terminal via the first access network.

6. The method of claim 5, further comprising:
receiving a second packet from the terminal via the first access network or a second network,
wherein the second packet is determined to be transmitted via any of the first access network or the second access network based on the INT information recorded in the first packet by each of the at least one node.

7. The method of claim 5, further comprising:
receiving an INT probe packet from the terminal.

8. The method of claim 5, wherein, in the determining, when a message including a multi-access rule for determining whether to instruct the recording of the INT information in the first packet is received from a second network entity performing a session management function, it is determined to instruct the recording of the INT information in the first packet, and
the multi-access rule further includes information on a frequency at which the first network entity performing the UPF instructs the recording of the INT information in a packet transmitted to the terminal.

9. A terminal in a wireless communication system, comprising:
a transceiver transmitting and receiving a signal; and
a control unit connected to the transceiver,
wherein the control unit controls to receive, via a first access network from a first network entity performing a user plane function (UPF), a first packet including respective pieces of in-band network telemetry (INT) information of one or more nodes included in a transmission path between the terminal and the first network entity,
determine a traffic distribution scheme based on the first packet including the one or more pieces of INT information; and
transmit a second packet to the UPF via the first access network or a second access network based on the determined traffic distribution scheme.

10. The terminal of claim 9, wherein the control unit controls to receive, from a second network entity performing a control plane function (CPF), a probe packet transmission request message requesting to transmit a packet for discovering a node recording the INT information to the first network entity performing the UPF, and
transmit an INT probe packet to the first network entity performing the UPF based on the probe packet transmission request message, and
the INT information includes at least one of a buffer queue length, a buffer occupancy, an accumulate total byte, a timestamp, or congestion experienced information for the node.

11. The terminal of claim 9, wherein the control unit controls to transmit, to any one of the one or more nodes, a combination request message requesting to combine the INT information of each of the at least one node, and
the combination of the INT information is performed when the INT information satisfies a specific condition, or the INT information is combined by any one of a combination method by an average value of the INT information, a combination method by a minimum value of the INT information, or a combination method by a maximum value of the INT information.

12. The terminal of claim 9, wherein the traffic distribution scheme is determined by at least one of a priority of traffic, a queue length of the traffic, or a weight of the traffic.

13. A first network entity performing a user plane function (UPF) in a wireless communication system, the first network entity comprising:
a transceiver transmitting and receiving a signal; and
a control unit connected to the transceiver,
wherein the control unit controls to determine whether each of one or more nodes included in a transmission path between a terminal and the first network entity on a first access network instructs recording of in-band network telemetry (INT) information,
generate a first packet including an indicator instructing the recording of the INT information when it is determined to instruct the recording of the INT information, and
transmit the generated first packet to the terminal via the first access network.

14. The first network entity of claim 13, wherein the control unit receives a second packet from the terminal via the first access network or a second network,
the second packet is determined to be transmitted via any of the first access network or the second access network based on the INT information recorded in the first packet by each of the at least one node, and
an INT probe packet is received from the terminal.

15. The first network entity of claim 13, wherein, when receiving a message including a multi-access rule for determining whether to instruct the recording of the INT information in the first packet from a second network entity performing a session management function, the control unit determines to instruct the recording of the INT information in the first packet, and
the multi-access rule further includes information on a frequency at which the first network entity performing the UPF instructs the recording of the INT information in a packet transmitted to the terminal.
